Europäisches Patentamt

European Patent Office

Office européen des brevets

(19)

(11) Numéro de publication : **0 438 947 B1**

## FASCICULE DE BREVET EUROPEEN

(12)

(45) Date de publication du fascicule du brevet :
**16.02.94 Bulletin 94/07**

(51) Int. Cl.⁵ : **G01C 21/00**

(21) Numéro de dépôt : **90403789.2**

(22) Date de dépôt : **27.12.90**

(54) **Système embarqué pour déterminer la position d'un véhicule aérien et ses applications.**

(30) Priorité : **12.01.90 FR 9000331**

(43) Date de publication de la demande :
**31.07.91 Bulletin 91/31**

(45) Mention de la délivrance du brevet :
**16.02.94 Bulletin 94/07**

(84) Etats contractants désignés :
**BE DE DK ES GB IT NL SE**

(56) Documents cités :
**GB-A- 2 060 306
GB-A- 2 144 007
IEEE POSITION LOCATION AND NAVIGATION
SYMPOSIUM RECORD, Kissimmee, Florida, 29
novembre - 2 décembre 1988, pages 297-302;
W. TANG et al.: "Precision trajectory reconstruction"**

(73) Titulaire : **AEROSPATIALE SOCIETE
NATIONALE INDUSTRIELLE Société
Anonyme dite:
37, Boulevard de Montmorency
F-75016 Paris (FR)**

(72) Inventeur : **Appriou, Alain
3, Rue de la Truie-qui-file
F-91400 Saclay (FR)**
Inventeur : **Dezert, Jean
2, Allée Mirabeau
F-92240 Malakoff (FR)**
Inventeur : **Bensimon, Joseph
13, Allée du Parc de la Bièvre
F-94240 l'Hay-Les-Roses (FR)**

(74) Mandataire : **Bonnetat, Christian
CABINET BONNETAT 23, Rue de
St.Pétersbourg
F-75008 Paris (FR)**

EP 0 438 947 B1

Jouve, 18, rue Saint-Denis, 75001 PARIS

## Description

La présente invention concerne un système embarque pour déterminer la position d'un véhicule aérien, pouvant être utilisé aussi bien pour le guidage automatique dudit véhicule (notamment mais non exclusivement dans le cas d'un véhicule non piloté) que pour l'apport d'une aide au pilote d'un véhicule piloté.

On sait que les systèmes de navigation inertiels, mettant en oeuvre une centrale à inertie, présentent des avantages d'autonomie par rapport à l'environnement et de discrétion, ce qui est particulièrement appréciable pour des engins militaires destinés à pénétrer en territoire ennemi. Dans ces systèmes de navigation inertiels, on détermine la position actuelle du véhicule par actualisation d'une position antérieure à l'aide de l'intégration de mesures accélérométriques et gyrométriques. De ce fait, ils sont sujets à des dérives qu'il est nécessaire de compenser pour que la position actuelle du véhicule puisse être connue avec une précision suffisante.

Aussi, dans ces systèmes de navigation inertiels, on a recours à des mesures périodiques de position à l'aide de capteurs appropriés, ce qui permet de corriger les résultats provenant de l'intégration desdites mesures accélérométriques et gyrométriques.

Notamment, lorsque l'on désire que le vol dudit véhicule soit autonome et discret, il est avantageux que ces mesures périodiques de recalage résultent de la corrélation entre l'image actuelle du terrain en cours de survol fournie par un capteur embarqué et une image de référence du terrain devant être survolé, cette image de référence étant établie préalablement au vol et emmagasinée dans une mémoire prévue à bord dudit véhicule aérien. Pour établir l'image actuelle et/ou l'image de référence du terrain, on peut, de façon connue, utiliser de nombreux types de capteurs, tels que l'altimètre (l'image est alors constituée par le relief du terrain), le radar millimétrique, le radiomètre millimétrique, les systèmes d'imagerie infrarouge ou optique, ou bien encore le laser.

Ainsi, dans ces systèmes connus, on établit une fonction de corrélation entre une image relevée sur une large zone de terrain (l'image actuelle) et une image similaire apprise au préalable et disponible dans la mémoire de bord (l'image de référence), ce qui suppose l'apprentissage de l'ensemble du terrain à survoler pour la grandeur utilisée par le capteur.

Le résultat de la corrélation entre ladite image actuelle et ladite image de référence constitue alors un signal d'erreur de position qui, à titre d'innovation unique, peut être appliqué à un filtre de KALMAN chargé de l'intégration des mesures inertielles. Ainsi, périodiquement, ledit filtre est recalé pour délivrer une position actuelle précise, de laquelle les dérives sont éliminées (cf. GB-A-2060306).

Les systèmes de navigation inertiels connus de ce type présentent cependant des inconvénients.

Tout d'abord, de par leur structure même à base de filtre de KALMAN, ils sont adaptés à n'utiliser l'image actuelle que d'un seul capteur ; ainsi, ils ne peuvent prendre en compte de façon pertinente plusieurs images actuelles provenant simultanément d'autant de capteurs différents, ce qui permettrait cependant d'accroître la précision de la position acutelle par utilisation judicieuse de la complémentarité de certains capteurs. De plus, ils exigent que l'image de référence comporte toutes les informations équivalant à celles que ledit capteur est susceptible de donner pour l'image actuelle, c'est-à-dire qu'il est nécessaire de faire l'apprentissage de la totalité du terrain à survoler pour la grandeur mesurée par le capteur et pour toutes les conditions d'observation. Un tel apprentissage est difficile, sinon impossible à acquérir de façon suffisamment fiable ; de toutes façons il est délicat et long à élaborer. Il en résulte de plus que ces systèmes connus nécessitent, à bord du véhicule, des moyens de calcul et des mémoires de capacités importantes. Par ailleurs, la souplesse d'emploi de ces systèmes connus est faible en ce qui concerne la planification ou la modification d'un vol, puisque celui-ci est assujetti à la connaissance et à la mémorisation des images du terrain à survoler.

La présente invention a pour objet de remédier à ces inconvénients.

A cette fin, selon l'invention, le système embarqué pour déterminer la position d'un véhicule aérien, du type comportant des moyens sensibles scrutant le territoire survolé, des moyens à filtre de KALMAN, des moyens de mémoire contenant la carte du territoire à survoler, des moyens de comparaison entre les informations délivrées par lesdits moyens sensibles et les informations desdits moyens de mémoire, ainsi que des moyens de calcul délivrant une innovation unique pour lesdits moyens à filtre de KALMAN, est remarquable en ce que :

- lesdits moyens de mémoire comportent une première mémoire contenant les caractéristiques générales de différents types d'amers discrets et une seconde mémoire contenant la position géographique de tels amers sur le territoire à survoler ;
- ledit système comporte de plus :
    . un dispositif pour extraire, des signaux délivrés par lesdits moyens sensibles, lesdites caractéristiques générales desdits différents types d'amers discrets se trouvant sur le territoire en cours de survol ; et
    . un dispositif pour calculer à partir des signaux délivrés par lesdits moyens sensibles les positions relatives dudit véhicule par rapport auxdits amers reconnus, qu'il adresse auxdits moyens à filtre de KALMAN ;

- et lesdits moyens de comparaison comportent un premier dispositif de comparaison comparant les informations provenant dudit dispositif d'extraction à celles contenues dans ladite première mémoire, ainsi qu'un second dispositif de comparaison comparant les informations provenant dudit premier dispositif de comparaison à celles contenues dans ladite seconde mémoire.

Ainsi, le système conforme à la présente invention permet de déterminer la position dudit véhicule aérien, uniquement à partir d'amers discrets et non pas, comme dans la technique antérieure, à partir de la totalité des éléments d'une carte. Il en résulte des économies en capacités de calcul et de mémoire. De plus, les cartes de référence sont plus faciles et plus simples à réaliser.

Conformément à un autre aspect de la présente invention, lesdits amers discrets sont traités un par un et non pas dans leur globalité. A cet effet, il est avantageux que lesdits moyens de calcul calculent, pour les informations provenant dudit premier dispositif de comparaison, la probabilité pour que chaque amer reconnu par lesdits moyens sensibles appartienne à chacun desdits types d'amers, que ladite seconde mémoire comporte pour chaque amer décrit par sa position géographique la probabilité que ledit amer a d'être de chacun desdits types d'amers et que ledit second dispositif de comparaison compare, pour chacun des amers contenus dans ladite seconde mémoire, les probabilités d'être de chacun desdits types d'amers aux probabilités semblables délivrées par ledit premier dispositif de comparaison pour un amer reconnu par lesdits moyens sensibles.

De préférence, lesdits moyens sensibles comportent une pluralité de capteurs différents.

Ainsi, il est possible de profiter des avantages de la complémentarité desdits capteurs.

Avantageusement, ledit second dispositif de comparaison procède à l'inférence desdites probabilités suivant des règles élaborées à partir de la théorie de l'évidence de Dempster et Shafer, tandis que la détermination de l'innovation unique par lesdits moyens de calcul est mise en oeuvre par la technique du PDAF de Bar Shalom.

Dans un mode de réalisation préféré, le système conforme à la présente invention comporte :

- une première unité de calcul, reliée audit dispositif de calcul des positions relatives du véhicule par rapport aux amers reconnus et au filtre de KALMAN proprement dit, estimant la position absolue d'un amer observé, ainsi que la matrice de covariance de l'innovation sur la position de l'amer obsevé ;
- une deuxième unité de calcul, reliée à ladite seconde mémoire et à ladite première unité de calcul, opérant un fenêtrage statistique des amers de ladite seconde mémoire ;
- une troisième unité de calcul, reliée à ladite deuxième unité de calcul, déterminant la probabilité d'associer l'amer détecté aux amers de ladite seconde mémoire, selon la technique du PDAF ;
- une quatrième unité de calcul, reliée au premier dispositif de comparaison, mettant en oeuvre les règles de l'inférence de la théorie de l'évidence pour effectuer la synthèse des informations disponibles sur l'identité des amers observés ;
- une cinquième unité de calcul, reliée aux deuxième et quatrième unités de calcul, établissant les masses à attribuer aux différents ensembles possibles d'hypothèses d'association de l'amer observé avec les amers de la seconde mémoire sélectionnés par la deuxième unité de calcul ;
- une sixième unité de calcul, reliée auxdites troisième et cinquième unités de calcul, effectuant la fusion des masses de probabilités attribuées aux hypothèses d'association de l'amer détecté aux différents amers de la seconde mémoire par ladite troisième unité de calcul avec les masses attribuées à tous les ensembles possibles d'hypothèses par ladite cinquième unité de calcul ;
- une septième unité de calcul, reliée à ladite sixième unité de calcul et évaluant l'innovation du filtre de KALMAN selon la technique du PDAF ; et
- une huitième unité de calcul, reliée à ladite septième unité de calcul et fournissant le gain au filtre de KALMAN et la mise à jour de celui-ci.

Le système conforme à la présente invention peut être utilisé dans un système d'aide à la navigation ou bien dans un système de guidage automatique. Dans le premier cas, on prévoit un dispositif visualisation sur lequel sont affichés les signaux de sortie du filtre de KALMAN ; dans le second, on agence des dispositifs exploitant les signaux de sortie du filtre de KALMAN pour agir sur les organes de commande en direction dudit véhicule.

Les figures du dessin annexé feront bien comprendre comment l'invention peut être réalisée. Sur ces figures, des références identiques désignent des éléments semblables.

La figure 1 est un schéma synoptique du système général conforme à la présente invention.

La figure 2 est le schéma synoptique d'un mode de réalisation préféré du système de la figure 1.

La figure 3 illustre l'application du système de l'invention au guidage automatique d'un missile.

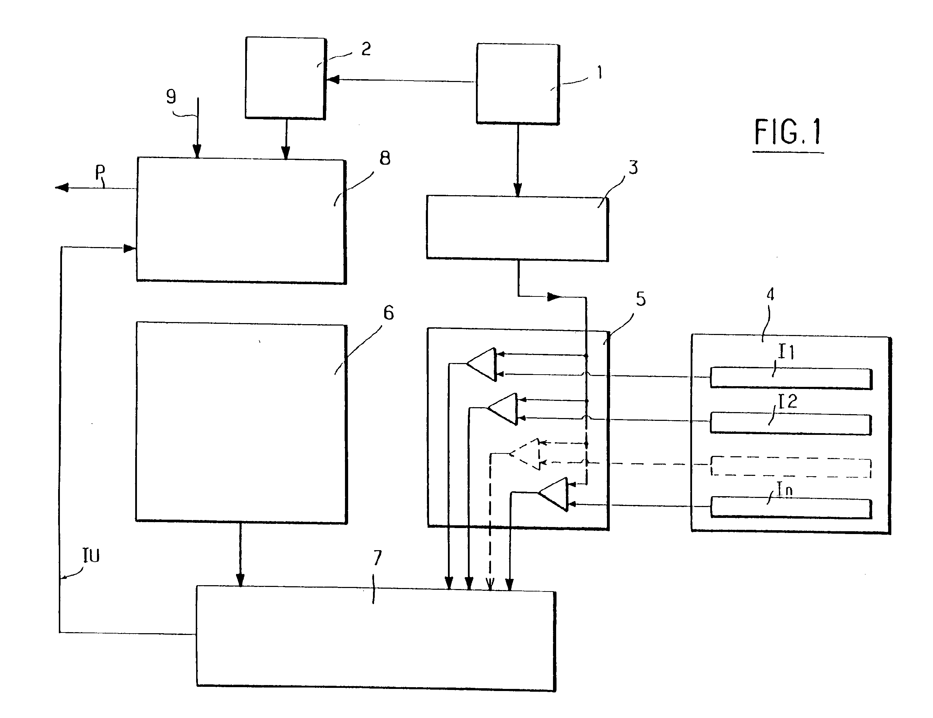

Le système selon l'invention, montré schématiquement sur la figure 1, est destiné à être monté à bord d'un véhicule aérien (non représenté). Il comporte un ensemble de capteurs 1, des moyens de calcul 2 recevant les signaux dudit ensemble de capteurs 1 et destinés à délivrer la position dudit véhicule aérien par rapport à des amers détectés par ledit ensemble 1, des moyens 3 pour extraire les caractéristiques desdits amers détectés, une première mémoire 4 contenant les caractéristiques générales d'amers particuliers, un dispositif de comparaison 5 recevant les signaux de sortie des moyens d'extraction 3 et de ladite première mémoire 4, une seconde mémoire 6 contenant les positions desdits amers particuliers susceptibles d'être rencontrés sur le terrain survolé par ledit véhicule aérien, des moyens de calcul 7 et un ensemble à filtre de KALMAN 8.

Contrairement aux systèmes de corrélation d'image connus décrits ci-dessus, le système conforme à la présente invention ne traite pas, à un instant donné, l'image de toute une zone de terrain, mais une petite image locale, propre à permettre la reconnaissance d'amers particuliers. La mise en oeuvre du système suppose la sélection préalable de quelques types d'amers Ii(avec i = 1,2,...,n) utilisables (par exemple : noeuds routiers, ponts, constructions...), la détermination de caractéristiques de l'image propres à discriminer globalement chaque type, indépendamment des conditions d'observation (accumulation par transformée de Hough, moments de l'objet segmenté, points particuliers de la FFT bidimensionnelle...), et la caractérisation statistique de la mesure de ces caractéristiques pour l'ensemble des amers d'un même type (modèle de distribution et erreurs possibles de ces modèles par rapport aux mesures observées).

Ainsi, dans le dispositif de la figure 1, à partir des images observées par l'ensemble de capteurs 1, on détermine grâce aux moyens 3 les caractéristiques correspondant à celles retenues pour les différents types d'amers présélectionnés. Les caractéristiques obtenues à la sortie des moyens 3 sont alors comparées dans le dispositif 5 aux caractéristiques similaires disponibles dans la première mémoire 4, pour chaque type Ii présélectionné. Les modèles de distribution statistique de ces mesures de caractéristiques permettent alors aux moyens de calcul 7 d'évaluer la probabilité que l'on a d'être en face d'un amer de chacun des types Ii répertoriés. La connaissance des erreurs possibles de modèle statistique peut permettre de surcroît de définir cette probabilité de façon incertaine, c'est-à-dire par exemple par un intervalle de probabilités possibles $\Delta(I_i)$.

Dans la seconde mémoire 6, on dispose par ailleurs d'une carte des amers appartenant à l'un ou l'autre des types Ii repertoriés, pour la zone de navigation envisagée. Cette carte est en fait une simple liste des amers concernés, dans laquelle chacun de ceux-ci est décrit par sa position géographique et la probabilité, éventuellement incertaine $\Delta(I_i)$, qu'il a d'être de chacun des types $I_i$ répertoriés. Le plus souvent, le type de chaque amer est bien connu : ce type est alors affecté d'une probabilité 1 ($\Delta =[1,1]$), les autres d'une probabilité 0 ($\Delta =[0,0]$). Le système est en fait présenté ici de façon à laisser la latitude d'employer des amers incertains par l'information dont on dispose sur eux, par exemple à cause du vieillissement de l'information, d'un moyen d'analyse inapproprié ou de mauvaise qualité, etc...

Pour chacun des amers répertoriés dans ladite seconde mémoire 6 et se trouvant donc dans le domaine d'incertitude de la navigation, on compare, dans les moyens de calcul 7 ses probabilités d'être de chacun des types Ii répertoriés, aux probabilités similaires délivrées par le dispositif 5 pour l'amer observe à l'aide du traitement décrit ci-dessus, pour les différents capteurs composant l'ensemble 1. L'inférence de ces probabilités incertaines est préférentiellement menée dans les moyens de calcul 7 par des règles élaborées à partir de la théorie de l'évidence de Dempster et Shafer, telle que définie dans les documents suivants.

(1) Dempster, Arthur P.
1967 "Upper and lower probabilities induced by a multivalued mapping", Annals of Mathematical Statistics, 38, pp. 325-339.
(2) Dempster, Arthur P.
1968 "A generalization of Bayesian inference", Journal of the Royal Statistical Society, Series B, 30.
(3) Shafer, Glenn
1976 A mathematical theory of evidence, Princeton University Press, Princeton, New Jersey.

De plus, l'inférence de ces probabilités incertaines prend avantageusement en compte la probabilité "certaine" qu'a chacun des amers répertoriés dans la seconde mémoire 6 d'être l'amer détecté, compte tenu de sa position et des caractéristiques statistiques de l'estimation de position délivrée par le filtre de prédiction du dispositif 8. Le résultat de cette opération procure une probabilité globale "certaine" qu'a chacun des amers situés dans le domaine d'incertitude de la navigation d'être l'amer détecté.

L'innovation unique IU délivrée par les moyens de calcul 7 à l'ensemble 8 à filtre de KALMAN standard résulte alors de la moyennation des erreurs de position que l'on obtiendrait si l'on associait successivement l'amer détecté aux différents amers de la carte de la seconde mémoire 6 pris en considération, chacune de ces erreurs étant pondérée par la probabilité associée à l'amer correspondant. Cette opération, de même que l'évaluation à partir du filtre de prédiction de la probabilité d'associer chaque amer à l'amer détecté, telle que présentée ci-dessus, sont avantageusement mises en oeuvre par la technique du PDAF (Probabilistic Data Association Filter) de Bar Shalom, qui est tout à fait compatible avec les informations disponibles et les problèmes posés et qui est par exemple exposée dans l'ouvrage suivant :

4

(4) Y. Bar Shalom, T. Fortmann Tracking and Data Association. Academic Press 1988.

On remarquera que la technique du PDAF est habituellement utilisée pour assurer la poursuite de cibles, lorsque leur détection s'effectue dans une ambiance à fort taux de fausses alarmes ; elle permet alors la gestion appropriée des faux échos et des manques de détection. Dans la présente application, les ambiguïtés en identité et en localisation des amers peuvent être assimilées à de tels faux échos de mesure de position de 1' amer détecté, c'est-à-dire de position du véhicule aérien lorsque l'on prend en compte la mesure de position relative entre le véhicule et l'amer détecté, fournie par les moyens de calcul 2 à l'ensemble 8. Eventuellement, des informations de position additionnelles peuvent être fournies (en 9) audit ensemble 8 par une centrale inertielle (non représentée).

On notera de plus que l'apprentissage des amers doit prendre en compte l'hypothèse où l'amer détecté est de type inconnu.

Les informations élaborées par le filtre de KALMAN de l'ensemble 8, relativement à l'état de la navigation (position et vitesse du véhicule notamment), sont alors disponibles à la sortie dudit ensemble pour un module de guidage de véhicule, ou pour une visualisation, selon l'application envisagée.

Ce qui précède met en évidence qu'il est possible d'utiliser une pluralité de capteurs, globalement représentés par le carré 1. Ces capteurs peuvent être des types connus rappelés ci-dessus et leur choix, leur nombre et leurs performances sont indifférents. Ils sont en pratique choisis sur la base de leur bonne complémentarité et de leur convivialité dans le cadre de l'application envisagée.

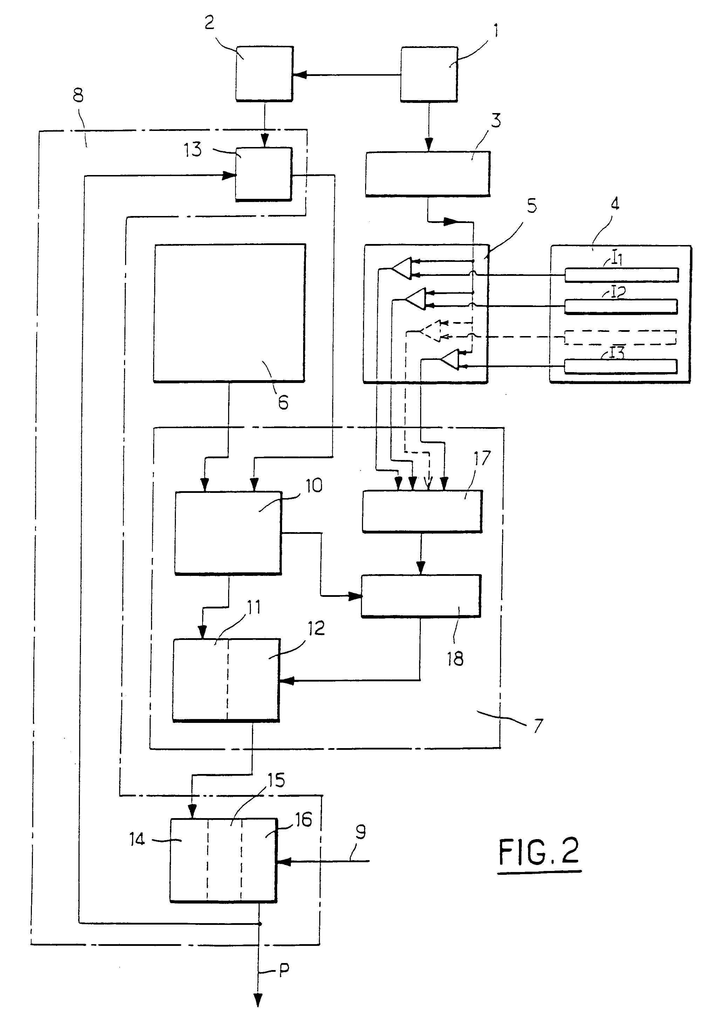

Sur la figure 2, on a représenté sous forme de schéma synoptique, un mode de réalisation pratique du système selon l'invention. Sur cette figure 2, on retrouve les éléments 1 à 9 du système de la figure 1 ; de plus, on peut y voir que les moyens de calcul 7 sont constitués de plusieurs unités de calcul 10,11,12,17 et 18, tandis que l'ensemble 8 comporte plusieurs unités de calcul 13,14 et 15, ainsi que le filtre de KALMAN 16, proprement dit. Ces différents éléments 1 à 18 sont reliés fonctionnellement de la façon suivante.

Les moyens de calcul 2 élaborent un vecteur $\underline{z}$ de mesure de position relative de l'amer détecté par les capteurs 1 par rapport au véhicule. Les mesures de position extraites des différents capteurs 1 alimentent les différentes composantes successives de ce vecteur. Ces moyens de calcul 2 élaborent également la matrice de covariance R du bruit de mesure du vecteur $\underline{z}$ (en pratique R = f(z), où f est spécifique des capteurs).

L'unité de calcul 13, reliée aux moyens de calcul 2 et au filtre de KALMAN 16, permet d'estimer la position absolue $(\hat{A})$ de l'amer observé, à partir de la position estimée $\hat{y}$ du véhicule délivrée par ledit filtre 16.

$$(1) \qquad \hat{A} = \hat{y} + z$$

ainsi que la matrice de covariance S de l'innovation sur la position de l'amer observé, à partir de la matrice de covariance prédite $\hat{P}$ sur l'erreur d'estimation de l'état (filtre 16), et connaissant la matrice d'observation H du système :

$$(2) \qquad S = H\hat{P} H^T + R$$

L'unité de calcul 10, reliée à la mémoire 6 et à l'unité de calcul 13 opère un fenêtrage statistique des amers référencés en $A_k$ dans la carte de navigation (mémoire 6), c'est-à-dire une première sélection des amers a priori suffisamment probables grâce à leur proximité de l'amer observé, estimé en $\hat{A}$ ; ils sont choisis sur la base de la condition :

$$(3) \qquad (A_k - \hat{A})^T S^{-1} (A_k - \hat{A}) \leqq \delta$$

où la constantes $\gamma$ permet d'ajuster la probabilité retenue pour l'association de $A_k$ et de $\hat{A}$.

L'unité de calcul 11, reliée à l'unité de calcul 10, assure la détermination des probabilités $\beta_k$ d'associer l'amer détecté aux amers référencés en Ak, et la probabilité $\beta_o$ pour que l'amer détecté ne soit aucun des amers retenus ; cette détermination est effectuée conformément à la technique classique du PDAF, sur la base des informations de prédiction du filtre 16 et de mesure de position de l'amer détecté (moyens de calcul 2), après traitement par les unités de calcul 13 et 10.

$$(4) \qquad \beta_o = \alpha_o \left[ \alpha_o + \sum_{\ell=1}^{K} \alpha_\ell \right]^{-1}$$

$$(5) \qquad \beta_k = \alpha_k \left[ \alpha_o + \sum_{\ell=1}^{K} \alpha_\ell \right]^{-1}$$

où

$$(6) \qquad \alpha_o = \frac{K}{V} (2\pi \,|S|\,)^{1/2} \times \frac{1 - P_D P_G}{P_D}$$

$$(7) \qquad \alpha_7 = \exp\left[ -\frac{1}{2}(A_k - \hat{A})^T S^{-1}(A_k - \hat{A})\right]$$

avec

K : nombre d'amers retenus par (3),

V : volume de l'ensemble des points $A_k$ satisfaisant (3),

$P_D$ : probabilité de détection d'un amer,

$P_G$ : probabilité d'avoir l'amer détecté dans V.

L'unité de calcul 12, reliée aux unités de calcul 11 et 18, effectue la fusion des masses de probabilité $m_L(\theta_k)$ = $\beta_k$, attribuées aux hypothèses $\theta_k$ d'association de l'amer détecté aux différents amers Ak par l'unité 11, avec les masses $m_{RC}(U\theta_k)$, attribuées à tous les ensembles possibles d'hypothèses $\theta_k$ par l'unité 18, sur la base de l'identification de l'amer. Cette fusion s'effectue selon les règles classiques d'inférence de Dempster pour fournir des masses $m_{LRC}(\theta_k)$ aux seules hypothèses $\theta_k$, à l'exclusion de tout ensemble de ces hypothèses (propriété liée au caractère similaire des masses $m_L$) :

$$(8) \qquad m_{LRC}(\theta_k) = \sum_{\substack{\theta \\ \theta_k \cap \theta \neq \varnothing}} m_L(\theta_k) \cdot m_{RC}(\theta) \; / \; (1-k)$$

où :

$$(9) \qquad k = \sum_{\substack{\theta, \theta_k \\ \theta_k \cap \theta = \varnothing}} m_L(\theta_k) m_{RC}(\theta)$$

$\theta$ désignant toute combinaison possible des hypothèses $\theta_k$.

L'unité de calcul 14, reliée à l'unité de calcul 12, permet d'évaluer l'innovation du filtre, $\tilde{A}$, selon la technique classique de PDAF, les probabilités $\beta_k$ d'associer l'amer détecté aux amers référencés en $A_k$ après prise en compte des informations de reconnaissance (unité 12) étant données par les masses $m_{LRC}(\theta_k)$ :

$$(10) \qquad \tilde{A} = \sum_{k=1}^{k} \beta_k (A_k - \hat{A})$$

L'unité de calcul 15, reliée à l'unité 14, fournit le gain G du filtre de KALMAN standard 16 :

$$(11) \qquad G = \hat{P} H^T S^{-1}$$

ainsi que la mise à jour dudit filtre par l'innovation en provenance de l'unité 14, à l'instant de la mesure :

$$(12) \qquad \check{x} = \hat{x} + G\tilde{A}$$

$$(13) \qquad \check{P} = \beta_0 \hat{P} + (1 - \beta_0) P^C + \tilde{P}$$

avec :

$$(14) \qquad \tilde{P} = G\left[\left(\sum_{k=1}^{M} \beta_k \tilde{A}\tilde{A}^T\right) - \tilde{A}\tilde{A}^T\right] G^T$$

et :

$$(15) \qquad P^c = (I - GH)\hat{P}$$

$\check{x}$ étant l'état estimé à partir de la mesure et de l'état $\hat{x}$ prédit par le filtre 16 et $\check{P}$ étant la matrice de covariance de son erreur.

Le filtre 16 assure la prédiction de l'état $\hat{x}$, de la matrice de covariance $\hat{P}$ sur son erreur, et de la mesure $\hat{y}$, à l'instant de mesure suivant, selon la technique classique du filtrage de KALMAN :

$$(16) \quad \hat{x} = \Phi \, \check{x} + u$$

$$(17) \quad \hat{P} = \Phi \, \check{P} \Phi^T + Q$$

$$(18) \quad \hat{y} = H\hat{x}$$

où

$\Phi$      est la matrice de transition du système.

Q      est la matrice de covariance de bruit d'état,

u      est la commande appliquée à l'engin.

Le filtre 16 fournit également la sortie P du système, c'est-à-dire la prédiction de l'état $\hat{x}$ aux instants, éventuellement intermédiaires, propices au guidage ou à la visualisation, selon l'application envisagée.

Les moyens d'extraction de caractéristiques 3, associés au dispositif de comparaison 5, réalisent les traitements locaux effectués au niveau de chaque capteur, et propres à chacun de ces capteurs, en vue d'effectuer la reconnaissance de l'amer observé. Conformément à ce qui a été décrit ci-dessus, ces traitements délivrent, pour chaque capteur, un intervalle de probabilités qu'a cet amer d'être d'un type donné (ou inconnu), et ceci pour tous les types répertoriés a priori. Les bornes de chaque intervalle sont assimilées aux notions de support $S_j(I_i)$ et de plausibilité $P_j(I_i)$ de la théorie de l'évidence, relativement à chaque hypothèse d'identité $I_i$ et à chacun des M capteurs j.

L'unité de calcul 17 reliée au dispositif de comparaison 5, met alors en oeuvre les règles d'inférence de la théorie de l'évidence pour effectuer la synthèse des informations ainsi disponibles sur l'identité de l'amer observé ; pour cela, elle peut procéder en deux temps :

1/ Elle réalise d'abord la fusion des informations délivrées par les différents capteurs 1 pour une même hypothèse $I_i$ d'identité. Ceci la conduit à élaborer N jeux de masses de probabilité en parallèle (un pour chacune des N identités $I_i$ possibles : $i \in [\,1, N\,]$ ) ; chaque jeu de masses est constitué d'une masse $m_i(I_i)$ attribuée à l'hypothèse d'identité $I_i$, d'une masse d'incertitude totale $m_i(E)$ attribuée à l'ensemble E des identités possibles, et d'une masse $m_i(\bar{I}_i)$ attribuée au refus de l'identité $I_i$, c'est-à-dire à l'ensemble des hypothèses de E à l'exclusion de $I_i$. Ces masses sont données par le processus :

$$(19) \quad m_i(I_i) = \frac{1}{k_i} \left[ \prod_{j=1}^{M} P_j(I_i) - \prod_{j=1}^{M} (P_j(I_i) - S_j(I_i)) \right]$$

$$(20) \quad m_i(\bar{I}_i) = \frac{1}{k_i} \left[ \prod_{j=1}^{M} (1 - S_j(I_i)) - \prod_{j=1}^{M} (P_j(I_i) - S_j(I_i)) \right]$$

$$(21) \quad m_i(E) = \frac{1}{k_i} \left[ \prod_{j=1}^{M} (P_j(I_i) - S_j(I_i)) \right]$$

avec:

$$(22) \quad K_i = \prod_{j=1}^{M} P_j(I_i) + \prod_{j=1}^{M} (1 - S_j(I_i)) - \prod_{j=1}^{M} (P_j(I_i) - S_j(I_i))$$

2/ Elle effectue ensuite la fusion de ces N jeux de masses $m_i$ selon une réalisation propre au nombre N d'identités possibles, et établie au préalable conformément à la formulation générale des règles d'inférence de Dempster, en vue d'obtenir un jeu de masse $m_R$ unique :

$$(23) \quad m_R(B) = \sum_{A_1, A_2 \ldots, A_N} \prod_{i=1}^{N} m_i(A_i) / (1 - \Gamma)$$

EP 0 438 947 B1

avec

$$A_1 \cap A_2 \cap ... \cap A_N = B \neq \phi$$

$$(24) \quad \Gamma = \sum_{A_1, A_2, ..., A_N} \prod_{i=1}^{N} m_i (A_i)$$

$$A_1 \cap A_2 \cap ... \cap A_N = \phi$$

On notera qu' un ensemble d'hypothèse $A_i$, désigne
- soit ($I_i$),
- soit $E = (I_i, I_2, ..., I_N)$,
- soit $\bar{I}_i = E - (I_i) = (I_i,..., I_{i-1}, I_{i+1}, ..., I_N)$

et que B peut désigner l'un quelconque des $2^N - 1$ sous-ensembles de E, c'est-à-dire toutes les combinaisons possibles $\bigcup_i I_i$ d'hypothèses d'identité $I_i$.

Cette unité de calcul 17 présente donc une fonction logique de gestion des conjonctions, et une fonction de calcul des masses.

L'unité de calcul 18, reliée aux unités de calcul 10 et 17, permet d'établir les masses $m_{RC}$ (U $\theta_k$) qu'il convient d'attribuer aux différents ensembles possibles d'hypothèses $\theta_k$ d'association de l'amer observé avec les amers $A_k$ sélectionnés par l'unité 10, en vue de leur prise en compte par l'unité de fusion 12. Les hypothèses d'association $\theta_k$ sont évaluées sur la base du jeu de masse $m_R$, élaboré par l'unité 17, qui décrit l'identité de l'amer observé, et sur la base de jeux de masses $m_c{}^k$ qui décrivent, par un traitement préalable des données en mémoire 6 similaire à celui de l' unité 17, l'identité de chacun des amers $A_k$ candidats. La réalisation combinatoire (logique) et calculatoire de l'unité 18 répond à la formulation générale :

$$(25) \quad m_{RC}(U\theta_k) = \sum_A m_R(A) \times \prod_{k \in N_k} \left[ \sum_{\substack{B \\ B \cap A \neq \phi}} m_c{}^k (B) \right] \times \prod_{k \notin N_k} \left[ \sum_{\substack{B \\ B \cap A = \phi}} m_c{}^k (B) \right]$$
$$k \in N_k$$

où :
- A et B désignent des sous-ensembles quelconques de E, c'est-à-dire des combinaisons quelconques d'hypothèses d'identité $I_i$,
- $N_k$ représente l'ensemble des indices des amers concernés par le calcul mené.

On voit ainsi que le système selon l'invention permet :
. la prise en compte de la seule reconnaissance d'amers particuliers dans le paysage, et de leur type parmi quelques types répertoriés a priori ;
. le traitement des ambiguïtés en identité et en localisation des amers, dues au niveau de rusticité des informations prises en compte ;
. la prise en compte circonstanciée de l'incertitude éventuellement liée aux méthodes de caractérisation d'objets par imagerie mises en oeuvre ;
. l'utilisation appropriée de plusieurs senseurs d'imagerie simultanément ;
. la possibilité éventuelle de ne pas nécessiter les informations de la centrale inertielle, moyennant un choix judicieux des amers et des capteurs (densité des différents types d'amer propre à assurer un recalage continu du filtre, conjointement à un lever permanent des ambiguïtés).

De ces particularités résultent de nombreux avantages par rapport aux systèmes existants :
1/ au niveau de la préparation de la mission de l'aéronef :
. l'apprentissage des données liées au terrain est plus aisée et plus simple : les informations sont plus faciles à obtenir parce que plus synthétiques, et demandant un traitement préalable bien moindre.
. la planification et le changement éventuel de mission présentent une bien plus grande souplesse, compte tenu de l'apprentissage nécessaire et de la structure du système (la mémoire 6 est simple à changer, et c'est la seule à modifier).
2/ au niveau du fonctionnement en vol :
. la capacité mémoire requise est moindre,
. la masse des calculs nécessaires est moindre,
. l'indépendance du système vis-à-vis des senseurs mis en oeuvre est plus grande.

8

3/ au niveau des performances opérationnelles :

. la robustesse du système aux types de terrains survolés et aux conditions du vol est plus grande,

. les besoins en quantité, en qualité et en fréquence des informations sont moins exigeants,

. les possibilités de couverture géographique du système sont plus étendues, en liaison avec les facilités introduites plus haut.

Comme cela a été mentionné ci-dessus, le système de l'invention peut être utilisé à bord d'un engin non piloté (missile, drône...) ou à bord d'un avion.

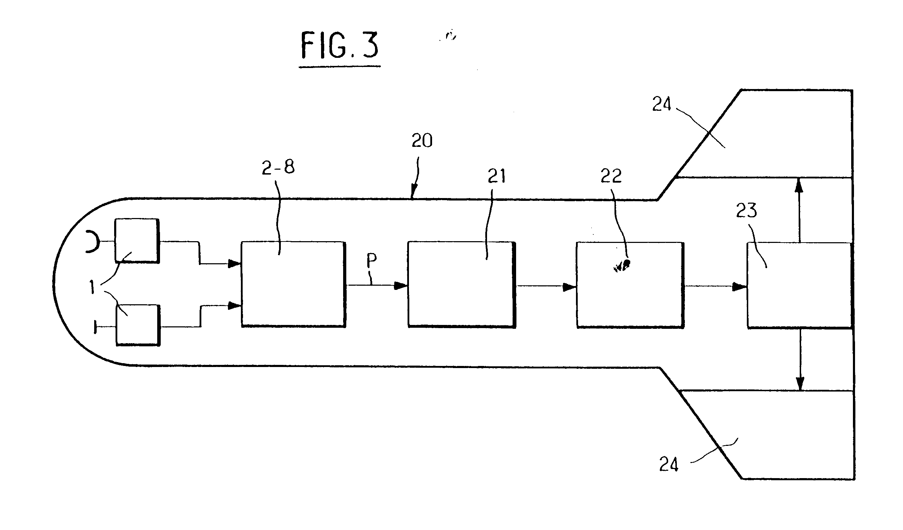

A bord d'un engin non piloté 20, son implantation peut être celle de la figure 3 ; les capteurs 1 alimentent le système 2 à 8 décrit au chapitre ci-dessus qui fournit à un module de guidage 21 l'état de l'engin (position, vitesse ...) disponible à sa sortie P. Le module de guidage 21 élabore, compte tenu du but de la mission, la trajectoire à suivre, qu'il communique à un module de pilotage 22, qui élabore alors les ordres à envoyer aux organes de commande 23 des gouvernes 24 de l'engin, de façon à l'asservir sur la trajectoire nominale définie par le module de guidage 21.

Dans le cas d'une implantation à bord d'un avion, la sortie du système 2 à 8 décrit peut être envoyée vers une unité de visualisation (non représentée) à la disposition du pilote ou du navigateur.

## Revendications

1. Système embarqué pour déterminer la position d'un véhicule aérien, du type comportant des moyens sensibles (1) scrutant le territoire survolé, des moyens (8) à filtre de KALMAN, des moyens de mémoire (4,6) contenant la carte du territoire à survoler, des moyens de comparaison (5,7) entre les informations délivrées par lesdits moyens sensibles (1) et les informations desdits moyens de mémoire, ainsi que des moyens de calcul (7) délivrant une innovation unique pour lesdits moyens (8) à filtre de KALMAN, caractérisé en ce que :

    - lesdits moyens de mémoire comportent une première mémoire (4) contenant les caractéristiques générales de différents types d'amers discrets et une seconde mémoire (6) contenant la position géographique de tels amers sur le territoire à survoler ;

    - ledit système comporte de plus :

        . un dispositif (3) pour extraire, des signaux délivrés par lesdits moyens sensibles (1), lesdites caractéristiques générales desdits différents types d'amers discrets se trouvant sur le territoire en cours de survol ; et

        . un dispositif (2) pour calculer à partir des signaux délivrés par lesdits moyens sensibles (1) les positions relatives dudit véhicule par rapport auxdits amers reconnus, qu'il adresse auxdits moyens (8) à filtre de KALMAN,

    - et lesdits moyens de comparaison comportent un premier dispositif de comparaison (5) comparant les informations provenant dudit dispositif d'extraction (3) à celles contenues dans ladite première mémoire (4), ainsi qu'un second dispositif de comparaison (7) comparant les informations provenant dudit premier dispositif de comparaison (5) à celles contenues dans ladite seconde mémoire (6).

2. Système selon la revendication 1, caractérisé en ce que lesdits moyens de calcul (7) calculent, pour les informations provenant dudit premier dispositif de comparaison (5), la probabilité pour que chaque amer reconnu par lesdits moyens sensibles (1) appartienne à chacun desdits types d'amers, en ce que ladite seconde mémoire (6) comporte pour chaque amer décrit par sa position géographique la probabilité que ledit amer a d'être de chacun desdits types d'amers et en ce que ledit second dispositif de comparaison (7) compare, pour chacun des amers contenus dans ladite seconde mémoire (6), les probabilités d'être de chacun desdits types d'amers aux probabilités semblables délivrées par ledit premier dispositif de comparaison (5) pour un amer reconnu par lesdits moyens sensibles (1).

3. Système selon la revendication 2, caractérisé en ce que lesdits moyens sensibles (1) comportent une pluralité de capteurs différents.

4. Système selon l'une des revendications 2 ou 3, caractérisé en ce que ledit second dispositif de comparaison (7) procède à l'inférence desdites probabilités suivant des règles issues de la théorie de l'évidence de Dempster et Shafer.

5. Système selon l'une des revendications 2 à 4, caractérisé en ce que la détermination de l'innovation unique par lesdits moyens de calcul (7) est mise en oeuvre par la technique du PDAF de Bar Shalom.

6. Système selon l'une des revendications 2 à 5,
caractérisé en ce qu'il comporte :
- une première unité de calcul (13), reliée audit dispositif (2) de calcul des positions relatives du véhicule par rapport aux amers reconnus et au filtre de KALMAN (16) proprement dit, estimant la position absolue d'un amer observé, ainsi que la matrice de covariance de l'innovation sur la position de l'amer observé ;
- une deuxième unité de calcul (10), reliée à ladite seconde mémoire (6) et à ladite première unité de calcul (13), opérant un fenêtrage statistique des amers de ladite seconde mémoire ;
- une troisième unité de calcul 11, reliée à ladite deuxième unité de calcul (10), déterminant la probabilité d'associer l'amer détecté aux amers de ladite seconde mémoire, selon la technique du PDAF ;
- une quatrième unité de calcul (17), reliée au premier dispositif de comparaison (5), mettant en oeuvre les règles de l'inférence de la théorie de l'évidence pour effectuer la synthèse des informations disponibles sur l'identité des amers observés ;
- une cinquième unité de calcul (18), reliée aux deuxième et quatrième unités de calcul (10 et 17), établissant les masses à attribuer aux différents ensembles possibles d'hypothèses d'association de l'amer observé avec les amers de la seconde mémoire (6) sélectionnés par la deuxième unité de calcul (10) ;
- une sixième unité de calcul (12), reliée auxdites troisième et cinquième unités de calcul (11 et 18), effectuant la fusion des masses de probabilités attribuées aux hypothèses d'association de l'amer détecté aux différents amers de la seconde mémoire (6) par ladite troisième unité de calcul (11) avec les masses attribuées à tous les ensembles possibles d'hypothèses par ladite cinquième unité de calcul (18) ;
- une septième unité de calcul (14), reliée à ladite sixième unité de calcul (12) et évaluant l'innovation du filtre de KALMAN selon la technique du PDAF ; et
- une huitième unité de calcul (15) reliée à ladite septième unité de calcul (14) et fournissant le gain au filtre de KALMAN (16) et la mise à jour de celui-ci.

7. Système d'aide à la navigation d'un véhicule aérien, caractérisé en ce qu'il comporte le système spécifié sous l'une quelconque des revendications 1 à 6 et un dispositif de visualisation sur lequel sont affichés les signaux de sortie (P) du filtre de KALMAN (16).

8. Système de guidage automatique d'un véhicule aérien (20),
caractérisé en ce qu'il comporte le système spécifié sous l'une quelconque des revendications 1 à 6 et des dispositifs (21,22,23) exploitant les signaux de sortie (P) du filtre de KALMAN (16) pour agir sur les organes (24) de commande en direction dudit véhicule (20).

**Claims**

1. In an airborne system for determining the position of an aerial vehicle, of the type comprising sensitive means (1) scanning the ground flown over, Kalman filter means (8), storage means (4, 6), containing the map of the ground to be flown over, means for comparison (5, 7) between the information delivered by said sensitive means (1) and information from said storage means, as well as computing means (7) delivering a unique innovation for said Kalman filter means (8), characterized in that:
- said storage means comprise a first memory (4) containing the general characteristics of different types of discrete landmarks and a second memory (6) containing the geographical position of such landmarks on the ground to be flown over;
- said system further comprises:
    . a device (3) for extracting, from the signals delivered by said sensitive means (1), said general characteristics of different types of discrete landmarks located on the ground being flown over; and
    . a device (2) for computing, from the signals delivered by the said sensitive means (1), the relative positions of said vehicle with respect to the said recognized landmarks, which it sends to said Kalman filter means (8);
- and said comparison means comprise a first comparison device (5) comparing the information from said extraction device (3) with that contained in said first memory (4), as well as a second comparison device (7) comparing the information from said first comparison device (5) with that contained in said second memory (6).

2. A system as claimed in claim 1, characterized in that said computing means (7) compute, for the information from said first comparison device (5), the probability that each landmark recognized by said sensitive means (1) belongs to each of said types of landmarks, said second memory (6) comprises for each landmark described by its geographical position the probability that said landmark has of being each of said types of landmarks and said second comparison device (7) compares, for each of the landmarks contained in said second memory (6), the probabilities of being each of said types of landmarks with the similar probabilities delivered by said first comparison device (5) for a landmark recognized by said sensitive means (1).

3. A system according to claim 2, characterized in that said sensitive means (1) comprise a plurality of different sensors.

4. A system according to any of claims 2 or 3, characterized in that said second comparison device (7) infers said probabilities following the rules drawn from Dempster and Shafer's theory of evidence.

5. A system according to any of claims 2 to 4, characterized in that determination of the unique innovation by said computing means (7) is implemented by Bar Shalom's PDAF technique.

6. A system according to any one of claims 2 to 5, characterized in that it includes:
   - a first computing unit (13), connected to said device (2) computing the relative positions of the vehicle with respect to the recognized landmarks and to the Kalman filter (16) properly speaking, estimating the absolute position of an observed landmark, as well as the covariance matrix of the innovation regarding the position of the observed landmark;
   - a second computing unit (10), connected to said second memory (6) and to said first computing unit (13), providing statistical fenestration of the landmarks of the said second memory;- a third computing unit (11), connected to said second computing unit (10), determining the probability of associating the detected landmark with the landmarks of the second memory according to the PDAF technique;
   - a fourth computing unit (17), connected to the first comparison device (5), putting into practice the rules of inference of the theory of evidence for synthesizing the information available concerning the identity of the observed landmark;
   - a fifth unit (18), connected to the second and fourth computing units (10 and 17), working out the masses to be attributed to the different possible sets of hypotheses of associating the observed landmark with the landmarks of the second memory (6) selected by the second computing unit (10);
   - a sixth computing unit (12), connected to the said thrid and fifth computing units (11 and 18), bringing about the fusion of the probable masses attributed to the hypotheses of associating the detected landmark with the different landmarks of the second memory (6) by said third computing unit (11), with the masses attributed to all the possible sets of hypotheses by said fifth computing unit (18);
   - a seventh computing unit (14), connected to said sixth computing unit (12) and evaluating the innovation of the Kalman filter using the PDAF technique; and
   - an eighth computing unit (15), connected to the said seventh computing unit (14) and supplying the gain to the said Kalman filter (16) and up-dating same.

7. A navigational aid system for an aerial vehicle, characterized in that it includes the system specified under any one of claims 1 to 6, and a display device on which the output signals (P) of the Kalman filter (16) are displayed.

8. Automatic guidance system for an aerial vehicle (20), characterized in that it includes the system specified under any one of claims 1 to 6, and devices using the output signals (P) from the Kalman filter (16) for acting on the members (24) controlling steering of said vehicle (20).

## Patentansprüche

1. Ein an Bord mitgeführtes System zur Bestimmung der Position eines Luftfahrzeuges, mit sensiblen Mitteln (1), die das überflogene Gebiet überprüfen, mit KALMAN-Filter bestückten Mitteln (8), Speichermitteln (4, 6), welche die Landkarte des zu überfliegenden Gebietes enthalten, Vergleichsmitteln (5, 7) zwischen den von den besagten sensiblen Mitteln (1) ausgegebenen Informationen und den Informationen der besagten Speichermittel, sowie Berechnungsmitteln (7), die eine einzige Innovation ausgeben für die besagten Mittel (8) mit KALMAN-Filter, dadurch gekennzeichnet, daß:

- die besagten Speichermittel einen ersten Speicher (4) aufweisen, welcher die allgemeinen Merkmale von verschiedenen diskreten Bakentypen enthält, und einen zweiten Speicher (6), welcher die geographische Lage solcher Baken auf dem zu überfliegenden Gebiet enthält; wobei
- das besagte System außerdem enthält:
  . eine Vorrichtung (3), um aus den von den besagten sensiblen Mitteln (1) ausgegebenen Signalen die besagten allgemeinen Merkmale der verschiedenen diskreten Bakentypen, die sich während des Überfluges auf dem Gebiet befinden, zu entnehmen; und
  . eine Vorrichtung (2), um aus den von besagten sensiblen Mitteln (1) ausgegebenen Signalen die entsprechenden Positionen des besagten Luftfahrzeugs in Bezug auf die besagten erkannten Baken zu berechnen, die sie dann den Mitteln (8) mit KALMAN.-Filter adressiert,
- und die besagten Vergleichsmittel eine erste Vergleichsvorrichtung (5) aufweist, welche die von der besagten Entnahmevorrichtung (3) ausgehenden Informationen mit denen in dem besagten ersten Speicher (4) vergleicht, sowie eine zweite Vergleichsvorrichtung (7), welche die von der besagten ersten Vergleichsvorrichtung (5) ausgehenden Informationen mit denen in dem besagten zweiten Speicher (6) vergleicht.

2.  System nach dem Anspruch 1,
    dadurch gekennzeichnet, daß die besagten Berechnungsmittel (7) für die aus der ersten Vergleichsvorrichtung (5) ausgehenden Informationen die Wahrscheinlichkeit errechnen, daß jede von den besagten sensiblen Mitteln (1) erkannte Bake zu jedem von den besagten Bakentypen gehört, daß der besagte zweite Speicher (6) für jede beschriebene Bake durch ihre geographische Lage die Wahrscheinlichkeit enthält, daß die besagte Bake zu jedem der besagten Bakentypen gehört, und daß die zweite Vergleichsvorrichtung (7) für jede in dem besagten zweiten Speicher (6) enthaltene Bake die Wahrscheinlichkeiten, daß sie zu jedem der besagten Bakentypen gehört, mit den gleichen Wahrscheinlichkeiten, die von der besagten ersten Vergleichsvorrichtung (5) für eine von den sensiblen Mitteln (1) erkannte Bake, vergleicht.

3.  System nach dem Anspruch 2,
    dadurch gekennzeichnet, daß die besagten sensiblen Mittel (1) eine Vielzahl verschiedener Sensoren enthalten.

4.  System nach einem der Ansprüche 2 oder 3,
    dadurch gekennzeichnet, daß die besagte zweite Vergleichsvorrichtung (7) die Schlußfolgerung der besagten Wahrscheinlichkeiten nach den aus der Augenscheinlichkeitstheorie von Dempster und Shafer ausgehenden Regeln vornimmt.

5.  System nach einem der Ansprüche 2 bis 4,
    dadurch gekennzeichnet, daß die Bestimmung der einzigen Innovation durch die besagten Berechnungsmittel (7) mit der PDAF-Technik von Bar Shalom vorgenommen wird.

6.  System nach einem der Ansprüche 2 bis 5,
    dadurch gekennzeichnet, daß es folgendes enthält:
    - ein erstes Rechenwerk (13), das mit der besagten Berechnungsvorrichtung (2) der entsprechenden Positionen des Luftfahrzeugs in Bezug auf die erkannten Baken und zum eigentlichen KALMAN-Filter (16) verbunden ist, wobei es den absoluten Standort einer Bake schätzt, sowie die Kovarianzmatrix der Innovation auf den Standort der beobachteten Bake;
    - ein zweites Rechenwerk (10), das mit dem besagten zweiten Speicher (6) und mit dem besagten ersten Rechenwerk (13) verbunden ist und eine statistische Ausrichtung der Baken des besagten zweiten Speichers vornimmt;
    - ein drittes Rechenwerk (11), das mit dem besagten zweiten Rechenwerk (10) verbunden ist und die Wahrscheinlichkeit bestimmt, ob die entdeckte Bake den Baken des besagten zweiten Speichers nach der PDAF-Technik zugeordnet werden kann;
    - ein viertes Rechenwerk (17), das mit der ersten Vergleichsvorrichtung (5) verbunden ist und die Schlußfolgerungsregeln der Wahrscheinlichkeitstheorie anwendet, um die Synthese der über die Identität der beobachteten Baken verfügbaren Informationen vorzunehmen;

- ein fünftes Rechenwerk (18), das mit dem zweiten und vierten Rechenwerk (10 und 17) verbunden ist, und die Massen, die den verschiedenen möglichen Zuordnungshypothesen der beobachteten Bake zu den Baken des zweiten Speichers (6), die vom zweiten Rechenwerk (10) ausgewählt wurden, zuzuteilen sind, erstellt;
- ein sechstes Rechenwerk (12), das mit dem besagten dritten und dem besagten fünften Rechenwerk (11 und 18) verbunden ist und die Fusion der Wahrscheinlichkeitsmassen, die den Zuordnungshypothesen der aufgespürten Bake zu den verschiedenen Baken des zweiten Speichers (6) durch das besagte dritte Rechenwerk (11) zugeordnet wurden, mit den Massen, die vom besagten fünften Rechenwerk (18) allen möglichen Hypothesenkomplexen zugeordnet werden, herstellt;
- ein siebtes Rechenwerk (14), das mit dem besagten sechsten Rechenwerk (12) verbunden ist und die Innovation des KALMAN-Filters nach der PDAF-Technik auswertet; und
- ein achtes Rechenwerk (15), das mit dem besagten siebten Rechenwerk (14) verbunden ist und dem KALMAN-Filter (16) die Ausbeute liefert und ihn auf den neuesten Stand bringt.

7. Navigationshilfssystem für ein Luftfahrzeug, dadurch gekennzeichnet, daß es das unter irgendeinem der Ansprüche 1 bis 6 spezifizierte System sowie eine Sichtanzeigevorrichtung,auf welchem die Ausgangssignale (P) des KALMAN-Filters (16) angezeigt werden, enthält.

8. Automatisches Luftfahrzeugleitsystem (20), dadurch gekennzeichnet, daß es das unter irgend einem der Ansprüche 1 bis 6 spezifizierte System sowie Vorrichtungen (21, 22, 23), welche die Ausgangssignale (P) des KALMAN-Filters (16) auswerten, um auf die Organe (24) zur Richtungssteuerung des besagten Luftfahrzeugs (20) einzuwirken, enthält.

FIG.1

EP 0 438 947 B1

FIG.2

EP 0 438 947 B1

FIG. 3

16